# EUROPÄISCHE PATENTSCHRIFT

(11) **EP 0 961 028 B1**
(45) Veröffentlichungstag und Bekanntmachung des Hinweises auf die Patenterteilung: **21.11.2001**
(21) Anmeldenummer: 99118299.9
(22) Anmeldetag: 03.08.1995
(51) Int. Cl.: F02M 69/54, F02M 37/00

(54) **Druckregelventil**
Pressure control valve
Soupape de régulation de pression

(30) Priorität: 27.08.1994 DE 4430472
(43) Veröffentlichungstag der Anmeldung: 01.12.1999
(62) Teilanmeldung aus: 95926372.4
(73) Patentinhaber: ROBERT BOSCH GMBH, 70442 Stuttgart (DE)
(72) Erfinder: Drutu, Lorenz, Dipl.-Ing., 71696 Möglingen (DE)

(56) Entgegenhaltungen:
- EP-A- 0 578 963
- EP-A- 0 636 785
- US-A- 4 774 923
- PATENT ABSTRACTS OF JAPAN vol. 014, no. 375 (M-1010), 14. August 1990 (1990-08-14) & JP 02 136561 A (YAMAHA MOTOR CO LTD), 25. Mai 1990 (1990-05-25)

## Beschreibung

### Stand der Technik

Die Erfindung geht aus von einem Druckregelventil nach der Gattung des Patentanspruchs 1. Es ist schon ein Druckregelventil bekannt (US-PS 5 078 167), das an einem Brennstoffilter einer Brennstoffversorgungsanlage für eine Brennkraftmaschine angeordnet ist und einen Grundkörper aufweist, in dessen mittlerem Bereich ein rohrförmiger Ventilsitzkörper mit einer Ventilsitzfläche befestigt ist. Zwischen dem Grundkörper und dem Ventilsitzkörper ist in ihrem mittleren Bereich eine Membran fest eingespannt, deren Umfang an einem Flansch des Grundkörpers eingespannt ist. In den Ventilsitzkörper ragt mit großem Spiel ein Brennstoffzuströmstutzen, der mit der Druckseite einer Brennstofförderpumpe verbunden ist. Der über den Brennstoffzuströmstutzen strömende Brennstoff gelangt teilweise in den Ventilsitzkörper und von diesem durch das Filtergewebe des Brennstoffilters und wirkt danach über eine Öffnung im Grundkörper auf eine Druckregelseite der Membran. Mit der der Druckregelseite der Membran abgewandten Rückströmseite der Membran ist ein Ventilschließkörper verbunden, der abgedichtet den Brennstoffzuströmstutzen umgibt und durch eine Bewegung der Membran auf diesem verschoben wird, um mehr oder weniger von der Ventilsitzfläche des Ventilsitzkörpers entgegen der Kraft einer an der Rückströmseite der Membran angreifenden Druckfeder abzuheben. Ein derartiges Druckregelventil ist sehr aufwendig gestaltet und besitzt aufgrund der durch die Abdichtung des Ventilschließkörpers am Brennstoffzuströmstutzen sich ergebende Reibung eine unerwünschte Hysterese und Regelungenauigkeit. Außerdem besitzt der Ventilschließkörper eine sehr große Masse, die durch die in ihrem mittleren Bereich und an ihrem Umfang gehäusefest an dem Grundkörper eingespannte Membran bewegt werden muß, wodurch ebenfalls die Reaktionsgeschwindigkeit des Druckregelventiles auf Druckänderungen beeinträchtigt wird.

Bekannt ist ebenfalls ein Druckregelventil (US-PS 4 300 510), das an einer Brennstoffverteilerleitung angeordnet ist. Dabei ist eine Membran des Druckregelventiles zwischen einem Ringflansch und einer Kappe an ihrem Umfang eingespannt und trägt in ihrem mittleren Bereich einen Ventilschließkörper, der mit einer ebenen Ventilsitzfläche an einem in die Brennstoffverteilerleitung hineinragenden Ventilsitzkörper zusammenwirkt. Auf der dem Ventilsitzkörper abgewandten Seite der Membran stützt sich eine Druckfeder ab, die andererseits an der Kappe anliegt. Auf die dem Ventilsitzkörper abgewandte Seite der Membran wirkt außerdem der in der Luftansaugleitung herrschende Druck der Brennkraftmaschine. Ein derartiges Druckregelventil hat den Nachteil, daß die durch die Membran zu bewegenden Massen noch relativ groß sind, wodurch die Reaktionsgeschwindigkeit bei Druckänderungen noch zu langsam ist.

In der nicht vorveröffentlichten EP-A-0 636 785 ist bereits ein Druckregelventil vorgeschlagen worden, das in einem Grundkörper ausgespannt eine Membran aufweist, die in ihrem mittleren Bereich ein Element mit einer Ventilsitzfläche trägt, die einen durch das Element und damit die Membran führenden Rückströmkanal umgibt. Auf das Element an der Membran ausgerichtet ist an dem Grundkörper ein Pfosten befestigt, der eine Lagerbohrung aufweist, in der eine als Ventilschließkörper dienende Kugel drehbar gelagert ist. Eine Druckfeder preßt das Element und damit die Ventilsitzfläche im geschlossenen Zustand des Druckregelventiles gegen eine Abflachung der Kugel. Die Lagerung der Kugel in dem Pfosten erfordert nicht nur ein zusätzliches Bauteil, sondern auch dessen zusätzliche Befestigung im Grundkörper, wozu zusätzlicher Bauraum und Aufwand erforderlich ist. Außerdem kommt es bei einer nicht ordnungsgemäßen Befestigung des Elementes zu Regelabweichungen. Bei einem weiteren Ausführungsbeispiel der EP-A-0 636 785 ist die als Ventilschließkörper dienende Kugel direkt in dem an der Membran befestigten Element drehbar gelagert und wirkt mit einer im Element vorgesehenen Ventilsitzfläche zusammen. Die Kugel ragt teilweise aus dem Element heraus und wird im geschlossenen Zustand des Druckregelventiles durch eine am Element angreifende Druckfeder gegen die Ventilsitzfläche und einen Vorsprung des Grundkörpers auf der Druckregelseite gepreßt.

Durch die JP-A-59170466 ist ein Druckregelventil bekannt, bei dem auf der Druckregelseite in einem Grundkörper ein Pfosten befestigt ist, an dem eine Kugel drehbar gelagert ist, die einen abgeflachten Ventilschließkörper trägt, der mit einer Ventilsitzfläche zusammenwirkt, die an einem mit der Membran verbundenen Element vorgesehen ist und einen Rückströmkanal zur Rückströmseite umgibt. Die Anordnung des Pfostens an dem Grundkörper bringt nicht nur zusätzlichen Befestigungsaufwand mit sich, sondern der Pfosten führt aufgrund seines Raumbedarfs zu einer unerwünschten Vergrößerung des Druckregelventiles. Ein nicht exakt befestigter Pfosten hat Regelungenauigkeiten zur Folge.

### Vorteile der Erfindung

Das erfindungsgemäße Druckregelventil mit den kennzeichnenden Merkmalen des Patentanspruches 1 hat demgegenüber den Vorteil, daß es ohne großen Aufwand auf einfache Art und Weise herstellbar ist, kompakt gebaut ist, genau den vorbestimmten Druck regelt und schneller auf Druckänderungen reagiert. Weiterhin ist das erfindungsgemäße Druckregelventil besonders geeignet zur Druckregelung in sogenannten "Returnless"-Brennstoffeinspritzsystemen, bei denen der durch die Brennstoffpumpe geförderte und nicht durch die Einspritzventile eingespritzte überschüssige Brennstoff unmittelbar stromabwärts der Brennstoffpumpe über das Druckregelventil wieder in den Brennstofftank zurückgeleitet wird. Die Hindurchführung des Rückströmkanales durch die Membran führt zu einer Verminderung der bewegten Massen und damit zu einer Verbesserung der Reaktionsgeschwindigkeit des Druckregelventiles. Die axiale Durchströmung bringt Einbauvorteile mit sich und ermöglicht eine bessere Integrierung in andere Aggregate. Die Kugel als Ventilschließkörper kann in bekannter Weise mit hoher Präzision hergestellt werden.

Durch die in dem abhängigen Patentanspruch aufgeführte Maßnahme ist eine vorteilhafte Weiterbildung und Verbesserung des im Patentanspruch 1 angegebenen Druckregelventiles möglich.

Vorteilhaft ist es, daß die Kraft einer an der Rückströmseite der Membran angreifenden Rückstellfeder durch Verbiegen des Bodens des Grundkörpers oder eines Körpers erfolgt, an dem das der Membran abgewandte Ende der Rückstellfeder anliegt.

### Zeichnung

Ausführungsbeispiele der Erfindung sind in der Zeichnung vereinfacht dargestellt und in der nachfolgenden Beschreibung näher erläutert. Es zeigen Figuren 1 bis 6 verschiedene Anordnungen von Druckregelventilen in Brennstoffversorgungsanlagen von Brennkraftmaschinen, Figur 7 ein erstes Ausführungsbeispiel eines erfindungsgemäßen Druckregelventiles, Figur 8 ein zweites Ausführungsbeispiel eines erfindungsgemäßen Druckregelventiles.

### Beschreibung der Ausführungsbeispiele

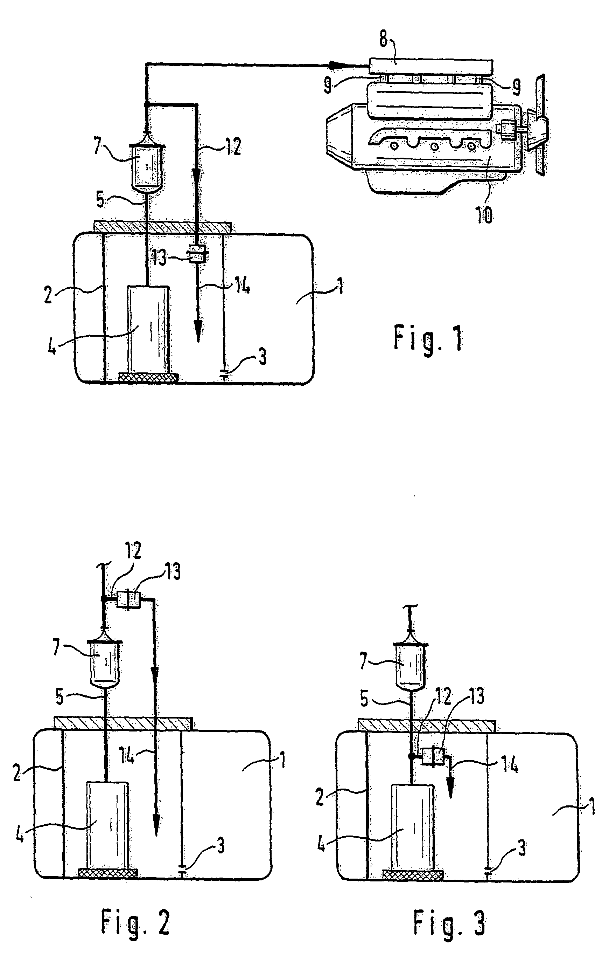

In der Figur 1 ist mit 1 ein Brennstofftank bezeichnet, in den eine sogenannte Tankeinbaueinheit 2 eingesetzt ist, die über eine Ausgleichsöffnung 3 in der Wandung der Tankeinbaueinheit aus dem Brennstofftank 1 mit Brennstoff versorgt wird. In der Tankeinbaueinheit 2 ist eine Brennstoffpumpe 4 angeordnet, die beispielsweise durch einen Elektromotor angetrieben wird und Brennstoff in eine Brennstoffleitung 5 nach außerhalb des Brennstofftanks 1 liefert. Bei dem in Figur 1 dargestellten Ausführungsbeispiel liegt außerhalb des Brennstofftanks 1 bzw. der Tankeinbaueinheit 2 in der Brennstoffleitung 5 ein Brennstoffilter 7. Die Brennstoffleitung 5 mündet in einen sogenannten Brennstoffverteiler 8, von dem aus der Brennstoff in Einspritzventile 9 gelangt, die in den Brennstoffverteiler eingesetzt sind und von denen beispielsweise vier dargestellt sind. Die Einspritzventile 9 sind mit ihren einspritzseitigen Enden in jeweils ein Einzelsaugrohr eines Zylinders einer gemischverdichtenden fremdgezündeten Brennkraftmaschine 10 eingesetzt und spritzen Brennstoff in unmittelbarer Nähe der Einlaßventile der einzelnen Zylinder ab. Stromabwärts des Brennstoffilters 7 zweigt von der Brennstoffleitung 5 eine Zweigleitung 12 ab, die zur Tankeinbaueinheit zurückführt. In der Zweigleitung 12 liegt innerhalb der Tankeinbaueinheit 2 ein Druckregelventil 13, das den Brennstoffdruck in der Brennstoffleitung 5 stromaufwärts der Einspritzventile 9 konstant hält und über das der durch die Brennstoffpumpe 4 geförderte und nicht durch die Einspritzventile 9 eingespritzte überschüssige Brennstoff in die Tankeinbaueinheit 2 zurückgeleitet wird. Dabei gelangt der durch das Druckregelventil 13 abgeregelte Brennstoff entweder unmittelbar aus dem Gehäuse des Druckregelventiles 13 in die Tankeinbaueinheit 2 oder strömt über eine stromabwärts des Druckregelventiles 13 vorgesehene Rückströmleitung 14 in die Tankeinbaueinheit 2.

Das Ausführungsbeispiel nach Figur 2 weicht von dem Ausführungsbeispiel nach Figur 1 lediglich dadurch ab, daß das Druckregelventil 13 in der Zweigleitung 12 außerhalb der Tankeinbaueinheit 2 und des Brennstofftanks 1 liegt.

Die Figur 3 zeigt ein Ausführungsbeispiel, bei dem zwar wie bei dem Ausführungsbeispiel nach Figur 1 das Druckregelventil 13 innerhalb der Tankeinbaueinheit 2 liegt, jedoch zweigt die Zweigleitung 12 bei diesem Ausführungsbeispiel nach Figur 3 bereits unmittelbar stromabwärts der Brennstoffpumpe 4 innerhalb der Tankeinbaueinheit 2 von der Brennstoffleitung 5 ab. Eine derartige Ausgestaltung, wie auch die nach Fig. 1 oder 2, wird "Returnless"-System genannt, da hierbei ohne lange Rückströmleitungen der von der Brennstoffpumpe 4 geförderte überschüssige Brennstoff, der nicht durch die Einspritzventile 9 abgespritzt wird, auf möglichst kurzem Wege, also ohne längere Leitungen und damit auch ohne eine unerwünschte Erwärmung im Motorraum in den Brennstofftank zurückgeleitet wird. Auch bei den Ausführungsbeispielen nach den Figuren 1 und 2 kann noch von einem "Returnless"-System gesprochen werden, da auch hierbei die Rückströmung des überschüssigen Brennstoffes in der Nähe des Brennstofftanks 1 erfolgt.

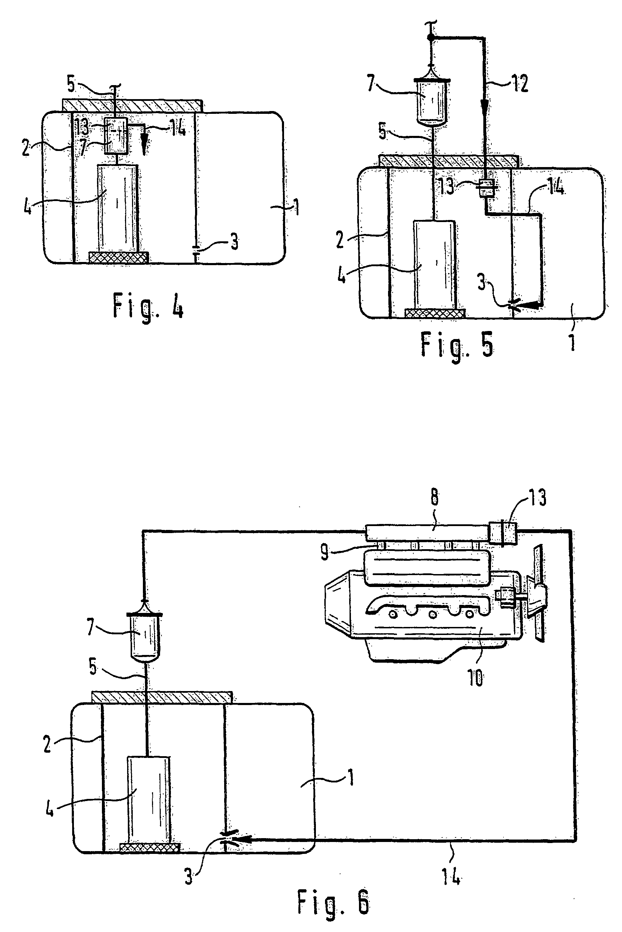

Die Figur 4 zeigt ebenfalls ein Ausführungsbeispiel einer als "Returnless"-System ausgebildeten Brennstoffversorgungsanlage, bei der unmittelbar stromabwärts der Brennstoffpumpe 4 innerhalb der Tankeinbaueinheit 2 auch der Brennstoffilter 7 angeordnet ist und an den Brennstoffilter 7 angebaut oder in den Brennstoffilter 7 integriert sowie innerhalb der Tankeinbaueinheit 2 liegend das Druckregelventil 13, so daß überschüssiger Brennstoff auf kürzestem Wege von der Brennstoffleitung 5 innerhalb der Tankeinbaueinheit 2 wieder auf die Saugseite der Brennstoffpumpe 4 zurückgeleitet wird.

Figur 5 zeigt ein Ausführungsbeispiel, bei dem ausgehend von dem Ausführungsbeispiel nach Figur 1 der von dem Druckregelventil 13 in die Rückströmleitung 14 abgeregelte überschüssige Brennstoff nicht direkt der Tankeinbaueinheit 2 zugeführt wird, sondern die Rückströmleitung 14 in einer als Strahlpumpe ausgebildeten Ausgleichsöffnung 3 endet, wie sie zur Befüllung derartiger Tankeinbaueinheiten bzw. an der Saugseite von Brennstoffpumpen bereits allgemein bekannt sind. Die in Figur 5 gezeigte Rückführung der Rückströmleitung 14 zu der Strahlpumpe 3 kann in entsprechender Weise auch bei den Ausführungsbeispielen nach den Figuren 2 bis 4 erfolgen.

Wie bei den bisherigen Ausführungsbeispielen, sind auch bei Figur 6 die gegenüber dem Ausführungsbeispiel nach Figur 1 gleichbleibenden und gleichwirkenden Teile durch die gleichen Bezugszeichen gekennzeichnet. In Figur 6 ist das Druckregelventil 13 stromabwärts des Brennstoffverteilers 8 angeordnet, vorzugsweise unmittelbar am Brennstoffverteiler 8, und die Rückströmleitung 14 vom Druckregelventil endet an der als Strahlpumpe ausgebildeten Ausgleichsöffnung 3 der Tankeinbaueinheit 2. Die Figuren 1 bis 6 zeigen nur einige der möglichen Anordnungen der in den folgenden Figuren beschriebenen Druckregelventile.

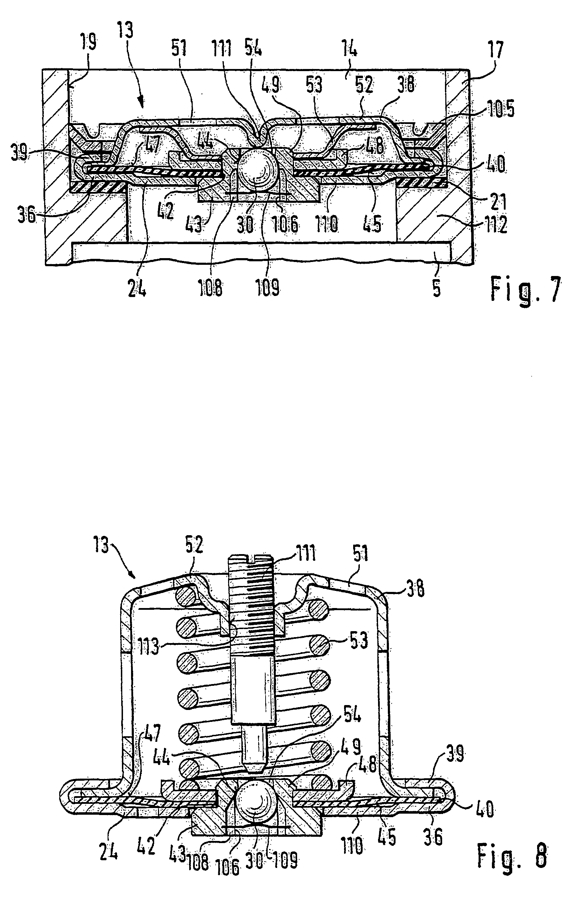

In der Figur 7 ist ein erstes Ausführungsbeispiel eines erfindungsgemäßen Druckregelventiles 13 dargestellt, das beispielsweise in einem aus einem Unterteil 17 und einem Oberteil 105 gebildeten Haltekörper angeordnet ist. Die Worte Oberteil und Unterteil werden hier nur zur besseren Unterscheidung zweier Teile verwendet. Das Oberteil und das Unterteil können beliebige Elemente verschiedener Aggregate sein. Unterteil 17 und Oberteil 105 umschließen eine sich in beide Teile erstreckende Aufnahmeöffnung 19, in der an der Trennebene der beiden Teile 17, 105 das Druckregelventil 13 eingespannt ist. Zwischen dem Unterteil 17 und dem Oberteil 105 kann in der Trennebene beispielsweise eine elastische Dichtung 21 vorgesehen sein. Im Unterteil 17 führt die Brennstoffleitung 5 in die Aufnahmeöffnung 19, während im Oberteil 105 die Rückströmleitung 14 von der Aufnahmeöffnung 19 fortführt. Der aus den Teilen 17, 105 gebildete Trägerkörper kann als separates Teil ausgebildet sein, er kann jedoch auch Teil des Brennstofftanks 1, der Tankeinbaueinheit 2, der Brennstoffpumpe 4, des Brennstoffilters 7, des Brennstoffverteilers 8 oder eines anderen Aggregates der Brennstoffversorgungsanlage sein. Beim Einbau des Druckregelventils 13 innerhalb des Brennstofftanks 1 bzw. der Tankeinbaueinheit 2 kann auf ein geschlossenes Oberteil 105 verzichtet werde, da der abgeregelte Brennstoff unmittelbar vom Druckregelventil in die Tankeinbaueinheit 2 bzw. den Brennstofftank 1 zurückströmen kann.

Bei dem in Figur 7 dargestellten Ausführungsbeispiel des Druckregelventiles 13 ist mit einer Membran 40 ein Ventilsitzkörper 43 verbunden, der koaxial zueinander in Strömungsrichtung zunächst einen Führungskanal 106, dann eine Ventilsitzfläche 44 und zu einer Rückströmseite 47 der Membran hin einen Rückströmkanal 54 aufweist. In dem Führungskanal 106 ist ein als Kugel ausgebildete Ventilschließkörper 30 axial geführt. Zum Führungskanal 106 hin offene Axialnuten 108 erstrecken sich im Ventilsitzkörper 43 bis zur Ventilsitzfläche 44 und ermöglichen ein leichtes Umströmen des Ventilschließkörpers 30 im Führungskanal. Auf der Rückströmseite 47 der Membran 40 liegt ein Federteller 48 an, mit dem der die Membran 40 in einem Durchbruch 42 durchgreifende Ventilsitzkörper 43 mittels einer Verformung 49 verbunden ist. Eine blattfederförmige Schließfeder 109 erstreckt sich quer durch den Führungskanal 106 und ist an ihren Rändern in dem Ventilsitzkörper 43 eingespannt, während ihr mittlerer Bereich an dem Ventilschließkörper 30 angreift und auf diesen eine Federkaft in Richtung zur Ventilsitzfläche 44 ausübt, um den Ventilschließkörper an der Ventilsitzfläche 44 in Dichtstellung zu halten. Die Schließfeder 109 ist als weiche Feder ausgebildet. Die Membran 40 ist an ihrem Umfang zusammen mit dem Umfang einer an der Rückströmseite 47 anliegenden topfförmigen Kappe 38 mittels eines Bördelrandes 39 in einem als abgestufter Blechkörper ausgebildeten Grundkörper 24 eingespannt. Der Grundkörper 24 selbst hat radial nach innen einen sich an einen Kragen 36 anschließenden Halteabsatz 110, der gegenüber dem Kragen 36 nur einen kleinen Abstand hat und sich horizontal bis annähernd zum Ventilsitzkörper 43 erstreckt. Wenn die Brennstoffversorgungsanlage nicht in Betrieb ist, so liegt die Membran 40 in ihrer Ruhestelle an dem Halteabsatz 110 ohne unerwünschte unzulässige Verformung an. Die Kappe 38 hat wenigstens eine Abströmöffnung 51, die im Kappenboden 52 vorgesehen sein kann und/oder im zylindrischen Mantelteil der Kappe. An der topfförmigen Kappe 38 stützt sich eine Rückstellfeder 53 ab, die beispielsweise als Biegefeder blattfederförmig ausgebildet ist und ebenfalls am Federteller 48 angreift. An der Kappe 38 ist eine Anschlagnase 111 ausgeformt, die sich in das Innere der Kappe erstreckt und fluchtend auf den Ventilschließkörper 30 ausgerichtet ist. Ist der Druck des Brennstoffes in der Brennstoffleitung 5 geringer als der zu regelnde Brennstoffdruck bzw. bei nicht arbeitender Brennstoffversorgungsanlage besteht zwischen dem in Form eines Halbringes ausgeformten Anschlagkörper 111 der Kappe 38 und dem Ventilschließkörper 30 ein axialer Abstand und der Ventilschließkörper 30 liegt dichtend an der Ventilsitzfläche 44 an. Steigt der Brennstoff druck auf einer der Brennstoffleitung 5 zugewandten Druckregelseite 45 der Membran über den zu regelnden Brennstoff druck, so wird die Membran in Richtung zur Kappe 38 hin durchgebogen und der Ventilschließkörper 30 kommt zur Anlage an den Anschlagkörper 111 und wird von diesem gehindert, eine weitere axiale Bewegung mit der Membran 40 auszuführen, so daß der Ventilschließkörper 30 von der Ventilsitzfläche 44 abhebt und Brennstoff über die Ventilsitzfläche 44 und den Rückströmkanal 54 zur Rückströmseite 47 abströmen kann und der Brennstoffdruck auf der Druckregelseite 45 auf dem vorbestimmten konstanten Wert gehalten wird. Das in ein Aggregat der Brennstoffversorgungsanlage, beispielsweise einen Brennstoffilter 17 im Brennstofftank 1 bzw. in der Tankeinbaueinheit 2 eingesetzte Druckregelventil 13 liegt dort mit dem Kragen 36 abgedichtet an einem Vorsprung 112 an und wird an diesem Vorsprung durch eine an dem Bördelrand 39 angreifende und das Oberteil bildende Zahnringscheibe 105 fixiert.

Das in Figur 8 dargestellte zweite Ausführungsbeispiel unterscheidet sich von dem Druckregelventil nach Figur 7 lediglich dadurch, daß die Kappe 38 in ihrem Kappenboden 52 einen zentralen Gewindeabschnitt 113 hat, der sich beispielsweise in das Innere der Kappe 38 erstreckt und in den ein als Schraube ausgebildeter Anschlagkörper 111 eingesetzt ist, der mit dem Ventilschließkörper 30 fluchtet. Steigt der Druck des Brennstoffes auf der Druckregelseite 45 der Membran über den vorbestimmten Druck, so liegt der Ventilschließkörper an dem Anschlagkörper 111 an und wird von der Ventilsitzfläche 44 abgehoben, so daß Brennstoff auf die Rückströmseite 47 strömen kann. Bei dem Ausführungsbeispiel nach Figur 8 ist gegenüber dem Ausführungsbeispiel nach Figur 7 die Rückstellfeder 53 als Druckfeder ausgebildet. Bei den Ausführungsbeispielen nach den Figuren 7 und 8 kann die Kraft der Rückstellfeder 53 jeweils durch Verbiegen des Kappenbodens 52 geändert werden.

## Patentansprüche

1. Druckregelventil für Brennstoffversorgungsanlagen von Brennkraftmaschinen, mit einem Grundkörper (24), mit einer an ihrem Umfang an dem Grundkörper (24) eingespannten nachgiebigen Membran (40), die eine von dem zu regelnden Brennstoff beaufschlagte Druckregelseite (45) und dieser gegenüberliegend eine Rückströmseite (47) hat, mit einer im mittleren Bereich der Membran (40) liegenden Ventilsitzfläche (44), mit einem mit der Ventilsitzfläche (44) zusammenwirkenden Ventilschließkörper (30) und mit einer in Ventilschließrichtung wirkenden Federkraft (53), wobei die Membran (40) relativ zu ihrem Umfang in ihrem mittleren Bereich mit der Ventilsitzfläche (44) auslenkbar ist und Brennstoff bei von dem Ventilschließkörper (30) abgehobener Ventilsitzfläche (44) über die Ventilsitzfläche (44) durch die Membran (40) von der Druckregelseite (45) in Richtung zur Rückströmseite (47) der Membran (40) strömen kann, und wobei mit der Membran (40) ein die Ventilsitzfläche (44) und einen von dieser zur Rückströmseite (47) führenden Rückströmkanal (54) aufweisender Ventilsitzkörper (43) verbunden ist, **dadurch gekennzeichnet, daß** der als Kugel ausgebildete Ventilschließkörper (30) im Ventilsitzkörper (43) in einem stromaufwärts der Ventilsitzfläche (44) liegenden Führungskanal (106) vollständig angeordnet ist und daß mit dem Grundkörper (24) auf der Rückströmseite (47) der Membran (40) eine Kappe (38) verbunden ist, an der ein auf den Ventilschließkörper (30) ausgerichteter Anschlagkörper (111) angeordnet ist.

2. Druckregelventil nach Anspruch 1, **dadurch gekennzeichnet, daß** im Ventilsitzkörper (43) eine weiche Schließfeder (109) angeordnet ist, die an der der Ventilsitzfläche (44) abgewandten Seite des Ventilschließkörpers (30) angreift und diesen in Richtung zur Ventilsitzfläche (44) hin beaufschlagt.

## Claims

1. A pressure control valve for fuel feed systems of internal combustion engines, with a body (24), with a flexible diaphragm (40), which is clamped at its circumference to the body (24) and has a pressure control side (45), on which the fuel to be controlled impinges, and a return flow side (47) opposite the former, with a valve seat surface (44) situated in the middle area of the diaphragm (40), with a valve closing body (30) interacting with the valve seat surface (44) and with a spring force (53) acting in the valve closing direction, the diaphragm (40) in its middle area with the valve seat surface (44) being displaceable relative to its circumference, and fuel being able to flow through the diaphragm (40) by way of the valve seat surface (44) from the pressure control side (45) towards the return flow side (47) of the diaphragm (40) when the valve seat surface (44) is lifted off from the valve closing body (30), and a valve seat body (43) having the valve seat surface (44) and a return flow duct (54) leading from the said surface to the return flow side (47) being connected to the diaphragm (40), **characterized in that** the valve closing body (30) of spherical design is arranged entirely in the valve seat body (43) in a guide duct (106) situated upstream of the valve seat surface (44), and that a cap (38), on which a stop body (111) centred on the valve closing body (30) is arranged, is connected to the body (24) on the return flow side (47) of the diaphragm (40).

2. The pressure control valve according to Claim 1, **characterized in that** a soft closing spring (109) is arranged in the valve seat body (43), which spring acts upon that side of the valve closing body (30) remote from the valve seat surface (44) and impinges on the said body in the direction of the valve seat surface (44).

## Revendications

1. Soupape de régulation de pression pour des installations d'alimentation en carburant de moteurs à combustion interne comprenant
- un corps de base (24),
- une membrane souple (40) fixée par sa périphérie sur le corps de base (24), cette membrane ayant un côté de régulation de pression (45) sollicité par le carburant à réguler et de l'autre côté un côté de retour de carburant (47), avec une surface formant siège de soupape (44) dans la zone centrale de la membrane (40),
- un organe d'obturation de soupape (30) coopérant avec la surface formant siège de soupape (44), et une force de ressort (53) agissant dans le sens de fermeture de la soupape, dans laquelle la membrane (40) par rapport à sa périphérie, est articulée dans la zone centrale avec la surface formant siège de soupape (44) et lorsque la surface formant siège de soupape (44) est soulevée par rapport à l'organe d'obturation (30), le carburant peut passer par la surface formant siège de soupape (44) à travers la membrane (40), du côté de régulation de pression (45) en direction du côté de retour (47) de la membrane (40), et
- la membrane (40) est reliée à un corps formant siège de soupape (43), qui présente la surface formant siège de soupape (44) et un canal de retour (54) partant de celle-ci vers le côté de retour (47),
**caractérisée en ce que**
l'organe d'obturation de soupape (30) est réalisé en forme de bille, et se trouve complètement dans un canal de guidage (106) du corps formant siège de soupape (43), en amont de la surface formant siège de soupape (44), et
un capuchon (38) est relié au corps de base (24), du côté de retour (47) de la membrane (40), ce capuchon comportant un organe de butée (111) aligné par rapport à l'organe d'obturation de soupape (30).

2. Soupape de régulation de pression selon la revendication 1,
**caractérisée en ce qu'**
un ressort de fermeture (109) souple prévu dans l'organe formant siège de soupape (43), agit contre le côté de l'organe d'obturation de soupape (30) à l'opposé de la surface formant siège de soupape (44) pour solliciter cet organe en direction de la surface formant siège de soupape (44).
